# EUROPEAN PATENT SPECIFICATION

(11) **EP 3 482 162 B1**
(45) Date of publication and mention of the grant of the patent: **12.08.2020**
(21) Application number: 17804737.9
(22) Date of filing: 08.11.2017
(51) Int. Cl.: G01C 21/36, G09B 29/10

(54) **SYSTEMS AND METHODS FOR DYNAMICALLY PROVIDING SCALE INFORMATION ON A DIGITAL MAP**
SYSTEME UND VERFAHREN ZUR DYNAMISCHEN BEREITSTELLUNG VON SKALENINFORMATIONEN AUF EINER DIGITALEN KARTE
SYSTÈMES ET PROCÉDÉS DE FOURNITURE DYNAMIQUE D'INFORMATIONS D'ÉCHELLE SUR UNE CARTE NUMÉRIQUE

(30) Priority: 21.11.2016 US 201615357069
(43) Date of publication of application: 15.05.2019
(73) Proprietor: Google LLC, Mountain View, CA 94043 (US)
(72) Inventor: TEITTINEN, Marko, Mountain View, CA 94043 (US)
(74) Representative: Smith, Jeremy Robert
(86) International application number: PCT/US2017/060491
(87) International publication number: WO 2018/093619

(56) References cited:
- US-A- 5 212 643
- US-A1- 2006 178 827
- US-A1- 2006 206 264
- US-A1- 2006 293 847
- US-B1- 6 392 661

## Description

### Technical Field

The present disclosure relates generally to computer-implemented user displays and digital mapping technology. More particularly, and without limitation, the present disclosure relates to systems, methods, and computer-readable media for dynamically providing scale information on a digital map.

### Background Information

Computing devices include graphical user interfaces and input mechanisms to allow for the request and display of digital map data. For example, a smartphone or portable navigation device may display a digital map for a requested geographic area. The map may be presented in one or more views, such as a street view, a traffic view, a navigation view, and/or a satellite view. The map views may be combined, manipulated, or modified based on user input.

In some cases, a digital map may include additional information to assist a user with interpreting or viewing the map. For example, a scale bar may be overlaid and presented in a corner of a rendered map image. The scale bar may indicate a dimension of the image area. Often, a user will inaccurately estimate the distance between two landmarks or points of interest on a displayed digital map. This can occur for a number of reasons, including due to an imprecise comparison or application of the scale bar. The static nature of some scale bars can also attribute to errors in interpreting distances or the scale of the map. Inaccurate estimates between landmarks or points of interest can lead to various issues, including a misunderstanding of the correct distance or time required to reach a desired destination.
Document US 2006/0293 847A1 discloses a system and method for controlling the scale of an image which comprises an image object in a graphical user interface and a ruler object providing a ruler display for distance measurement in the image. Document US 2006/0206264A1 discloses a combined map scale and measuring tool can be used in digital mapping systems, which, in a scale indicates the correct scale, for example, at the center of the map. It can be updated with every pan, zoom or resize operation the user performs, and can further update to compensate for map distortion caused by the map projection.

Therefore, there is a need for improved systems and methods for displaying digital maps and presenting scale information for such maps. There is also a need for enhanced features and functionality related to scale bars, including computer-implemented solutions that can provide more dynamic and accurate scale information with rendered digital maps. Furthermore, there is a need for solutions that can provide scale information in way that is responsive to user input and other dynamics, such as the size or orientation of the user's display screen.

### SUMMARY

In accordance with embodiments of the present disclosure, computer-implemented systems, methods, and computer-readable media are provided for displaying digital maps and dynamically providing scale information for such maps. In accordance with some embodiments, systems and methods are provided for displaying digital maps with an enhanced graphical scale element overlay and for displaying and dynamically updating the overlaid graphical scale element.

In accordance with an aspect of the invention, a computer-implemented system is provided according to claim 1.

In accordance with another aspect of the invention, a computer-readable medium is provided according to claim 14.

In accordance with still another aspect of the invention, a computer-implemented method is provided according to claim 15.

Additional embodiments and related features of the present disclosure are described herein.

### BRIEF DESCRIPTION OF THE DRAWINGS

The accompanying drawings, which are incorporated in and constitute a part of this disclosure, illustrate several embodiments and aspects of the present disclosure, and together with the description, serve to explain certain principles of the presently disclosed embodiments.
FIG. 1 illustrates an exemplary system environment for implementing embodiments and features of the present disclosure.
FIG. 2 illustrates a diagram of an example computing device viewport including a graphical scale element, consistent with embodiments of the present disclosure.
FIG. 3 illustrates a diagram of another example computing device viewport including a graphical scale element, consistent with embodiments of the present disclosure.
FIG. 4 illustrates a flowchart of a method to display a digital map and a graphical scale element, consistent with embodiments of the present disclosure.
FIG. 5 illustrates a diagram of an example digital map including a graphical scale element, consistent with embodiments of the present disclosure.
FIG. 6 illustrates a diagram of another example digital map including a graphical scale element, consistent with embodiments of the present disclosure.
FIG. 7 illustrates a flowchart of a method to update a graphical scale element, consistent with embodiments of the present disclosure.
FIG. 8 illustrates a diagram of a still further example digital map including a graphical scale element, consistent with embodiments of the present disclosure.
FIG. 9 illustrates a diagram of another example digital map including a graphical scale element, consistent with embodiments of the present disclosure.
FIG. 10 illustrates an exemplary electronic apparatus or system for implementing embodiments and features of the present disclosure.

### DETAILED DESCRIPTION OF EXEMPLARY EMBODIMENTS

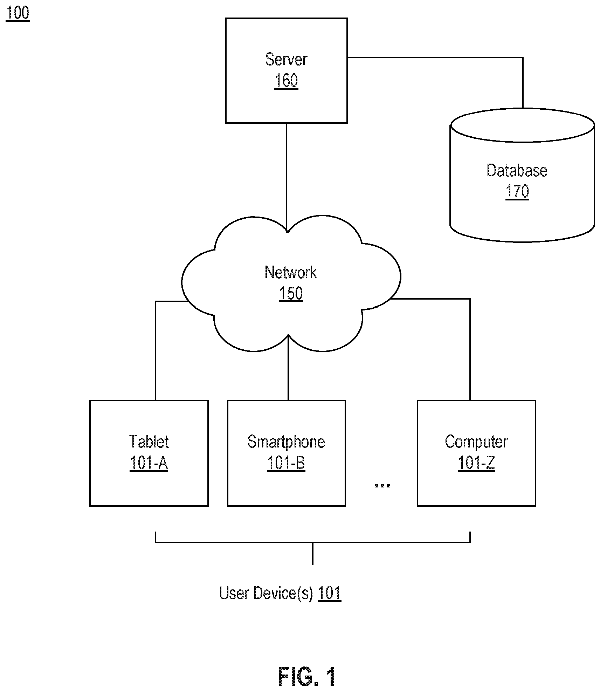

Embodiments of the present disclosure will now be described. Example embodiments are described with reference to FIGs. 1-10, which may be implemented together or individually.

The present disclosure describes computer-implemented systems and methods for displaying a digital map with scale information. Consistent with the present disclosure, the scale information may be displayed and updated dynamically in response to user input and/or other inputs. According to certain embodiments, the map data may be displayed by a user device comprising a computing device (e.g. a computer, a laptop, a tablet, a smartphone, a wearable computing device, navigation system as part of a vehicle, etc.). The computing device may include a communications interface, a display, at least one processor, and a memory device. In some embodiments, the display of map data may include a digital map image and an overlay of a graphical scale element. The digital map image may be rendered based upon a current location of a user device and/or a geographic area requested by a user, for example. In some embodiments, the graphical scale element may include a graphical rectangle icon indicative of the shape and orientation of the display of the computing device and circumscribing a graphical arrow indicative of a horizontal or vertical orientation of the displayed scale distance. In other embodiments, the processor may use JavaScript stored in memory of the user device to overlay the graphical scale element as an HTML element superimposed on the digital map image.

In some embodiments, the processor may receive a request for displaying digital map data. For example, a web browser or other application on the user device may send an HTTP or other request including location information to a server (e.g., a web or local server). The server may send a database query to a map vectors database. Vectors corresponding to the received location information may be utilized by the server to generate a bitmap map image, which may be converted into an image format suitable for display in the browser or other application.

In still additional embodiments, the server may send a database query to a map raster database. The map raster database may extract a map image from a larger preassembled map image, which may then be delivered to a user device for display.

In some embodiments, rather than executing a vector-based or raster-based system, a tile-based system may be implemented. The processor may send a request for map data to a map tile server, and a user device may receive a set of map tiles corresponding to a location request.

In certain embodiments, a tile maker may cut large raster images into a set of map tiles according to a map painter library or a commercially available rich map engine library. The processor may assemble a received set of cut map tiles in a grid, orient the tile grid relative to a clipping shape, and may display the grid as a singular map image within a web browser. The map image may include data for generating two-dimensional (2D) or three-dimensional (3D) map images.

In some embodiments, the processor may perform actions to determine a viewport for displaying the map data on a user device. For example, a viewport generation engine may be located on a map server and may generate parameters for map viewports. In some embodiments, a processor may determine a geographic area of a user device based on Global Positioning System (GPS) and may interact with a display routine and/or a viewport indicator routine to transmit information to the viewport generation engine. In certain embodiments, the viewport generation engine may receive transmission of an identifier indicating a device type.

In further embodiments, the viewport generation engine may determine an orientation of the user device based on receiving output data from one or more sensors located on the user device. In other embodiments, the viewport engine may determine user input based on user interaction and selection of one or more viewport indicators overlaid on an existing rendered digital map. The viewport indicators may be representative of a zooming or panning selection over a particular geographic area of a map image. User input may further be determined based on stored historical user interaction and viewport data stored in a server or database. According to the viewport parameters generated by a viewport engine, the processor may identify an orientation or position of a default or initial scale configured to display map data on the user device.

In some embodiments, the orientation of the scale may be adjusted based on a map projection implemented. The processor may dynamically update a map projection in order to minimize distortion so that a digital map can be correctly interpreted by a user. Map projections typically distort the shape, area, distance, direction, and/or other spatial properties of a digital map. In some embodiments, a Transverse Mercator projection may be implemented. Mercator projections typically amplify the size of map items the further they are located from the equator. In some embodiments, a cylindrical projection or an equal-area Galls-Peter projection may be implemented. In such a projection, the shape as opposed to the size of map areas may be distorted.

In some embodiments, an Albers Equal Area Conic projection may be implemented to minimize distortion for shape and size. In other embodiments, a Chamberlin Trimetric projection may be implemented to maintain a distance between three predetermined location points. Other known projections may be implemented consistent with this disclosure.

In some embodiments, a Mercator projection may be used to convert curved Earth surfaces for display on a flat screen. Since a Mercator projection typically distorts distances such that the distances in regions in high latitudes (closer to the poles) are enlarged in comparison with the distances proximate to the equatorial region, a scale may be oriented or positioned extending from the center of the left edge to the center of the right edge of a determined viewport. In some embodiments, the processor may orient a scale extending from the center of the bottom edge to the center of the top edge. The processor may calculate a scale distance based on a measurement from a center of a left edge to the center of a right edge of a determined viewport, wherein the distance measurement is a measurement of the determined scale corresponding to the determined viewport.

In other embodiments, the processor may calculate the scale distance based on a measurement from the center of a bottom edge to the center of the top edge of a determined viewport. The processor may compute the distance in conjunction with Google Maps or other software mapping applications and/or algorithms. With a scale indicator showing the total distance from one edge of the screen to the opposite edge of the screen, a user can quickly estimate whether attractions are within a walk-able distance from each other or not.

In some embodiments, the processor may provide instructions to display a graphical element specifying the calculated scale distance and a determined scale orientation. In further embodiments, the processor may update the scale distance and scale orientation every time the map view is panned to a new location and/or when the map is zoomed in or out according to one or more viewport identifiers. In other embodiments, when the graphical scale element is touched or clicked, the processor may provide instructions to re-calculate and display the distance from the point in the middle of the top edge to the point in the middle of the bottom edge. In some embodiments, the processor may display this new scale distance and new scale orientation as part of a new overlaid graphical scale element overlaid on the digital map image displayed in the viewport of the user device.

In other embodiments, the direction of the graphical rectangular icon and/or the graphical arrow may change consistent with display of the new graphical scale element. Other systems and methods for providing digital maps with an enhanced graphical scale element overlay and for displaying and dynamically updating the overlaid graphical element are disclosed herein.

Reference will now be made in detail to the present exemplary embodiments of the present disclosure, examples of which are illustrated in the accompanying drawings. Wherever possible, the same reference numbers will be used throughout the drawings to refer to the same or like parts.

FIG. 1 is a block diagram of an exemplary system environment 100 for implementing embodiments and features of the present disclosure. The arrangement and number of components in system 100 is provided for purposes of illustration. Additional arrangements, number of components, and other modifications may be made, consistent with the present disclosure.

As shown in FIG. 1, system environment 100 may include one or more user devices 101 that are owned or operated by one or more users. By way of example, user devices 101 may include tablets, smartphones, netbooks, electronic readers, personal digital assistants, personal computers, laptop computers, desktop computers, and/or other types of electronics or communication devices. Exemplary tablet 101-A, smartphone 101-B, and computer 101-Z are shown in FIG. 1. In some embodiments, user devices 101 are implemented with hardware devices and/or digital mapping software applications running thereon. In certain embodiments, user devices 101 may implement embodiments and features of the present disclosure without the need for accessing another device, component, or network, such as network 150. In other embodiments server 160 may implement embodiments and features of the present disclosure without the need for accessing another device, component, or network 150. In yet other embodiments, user devices 101 may be configured to communicate to and/or through network 150 with other clients and components, such as server 160 and database 170.

In certain embodiments, network 150 may include any combination of communications networks. For example, network 150 may include the Internet and/or any type of wide area network, an intranet, a metropolitan area network, a local area network (LAN), a wireless network, a cellular communications network, etc. In some embodiments, user devices 101 may be configured to transmit requests (e.g., map data requests based on input provided by users on a graphical user interface) through network 150 to an appropriate server, such as, for example, server 160. In some embodiments, user devices 101 may also be configured to receive information, such as map data, in response to a request, from server 160 through network 150.

Server 160 may include one or more servers, such as a web server and/or a map tile server, configured to communicate and interact with user devices 101, network 150, and/or database 170. In some embodiments, server 160 may implement or provide one or more digital maps based on requested map data including requests for roadmap, satellite, hybrid, and/or terrain map data according to a determined location of a user device 101. Server 160 may be a general purpose computer, a mainframe computer, or any combination of these components. In certain embodiments, server 160 may be standalone computing system or apparatus, or it may be part of a subsystem, which may be part of a larger system. For example, server 160 may represent distributed servers that are remotely located and communicate over a communications medium (e.g., network 150) or over a dedicated network, for example, a LAN. Server 160 may be implemented as a server, a server system comprising a plurality of servers, or a server farm comprising a load balancing system and a plurality of servers.

Database 170 may include one or more logically and/or physically separate databases, including, for example, a vector database, raster database, map database, viewport database, and/or a user interaction database, configured to store data. The data stored in database 170 may be received from servers 160, from user devices 101 and/or may be provided as input using conventional methods (e.g., data entry, data transfer, data uploading, etc.). The data stored in the database 170 may take or represent various forms including, but not limited to, general mapping and geographic information, latitude and longitude (Lat/Lon) values according to a WGS84 standard, world coordinates, tile coordinates, pixel coordinates, Mercator and/or other map projection data, user identifier data, device type data, viewport data, device orientation data, user input or interaction data, scale data, and a variety of other electronic data, or any combination thereof. Database 170 may also include, for example, street, city, state, and country data representative of multiple geographic tiers, and/or a corpus of content including documents, search logs, cookies, web pages, and/or social network content, etc.

In some embodiments, database 170 may be implemented using a local computer-readable storage medium. In other embodiments, database 170 may be maintained in a network attached storage device, in a storage area network, or combinations thereof, etc. Furthermore, database 170 may be maintained and queried using numerous types of database software and programming languages, for example, SQL, MySQL, IBM DB2®, Microsoft Access®, PERL, C/C++, Java®, etc. Although FIG. 1 shows database 170 associated with server 160, database 170 may be a standalone database that is accessible via network 150 or database 170 may be associated with or provided as part of a system or environment that may be accessible to user devices 101 and/or other components.

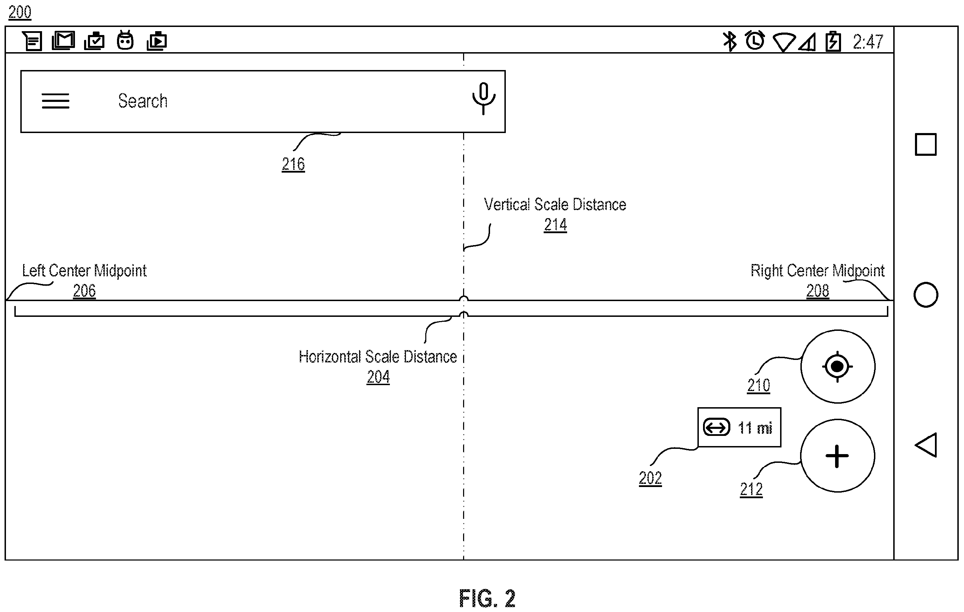

FIG. 2 illustrates a diagram of an example computing device viewport and graphical scale element, consistent with embodiments of the present disclosure. The exemplary computing device viewport 200 may include a screen and/or a graphical user interface (GUI) configured to include one or more graphical elements or icons overlaid user selection or display. In some embodiments, viewport 200 may be configured to implement Google Maps or another digital mapping software application. For example, the GUI may include display of a web browser including a Google Maps search tool bar 216 configured to receive and process search queries related to displayed map data. The search tool bar 216 may allow for a user to search for a displayed map area for one or more landmarks, including but not limited to hotels, gas stations, etc.

In some embodiments, the GUI may include buttons 210 and 212 for user interaction or input. For example, upon user selection, button 210 may provide a prompt to a user asking for permission to access the current GPS location of a user device 101. In response to user approval, the processor may zoom the displayed map image to fit the map data to the boundaries of computing device viewport 200, and may surround the map data around an origin aligned with current geographic location of the user device 101. In further embodiments, selection of button 212 may provide a dialogue box to a user to allow for entry of text indicating a desired zip code or geographic area, or a current address and an intended destination address. Entry of this information may be transmitted over network 150 to server 160 as a part of a request for map data.

In some embodiments, FIG. 2 may include a graphical scale element 202 that may be displayed in viewport 200. While graphical scale element 202 is shown in the bottom right corner of the viewport 200, it is contemplated that graphical scale element 202 may be positioned in any other corner of a GUI or may be displayed in any other predetermined or user specified position within viewport 200. In some embodiments, the graphical scale element 202 may include display of a scale distance value and associated measurement units, including standard and/or metric units. The scale distance value may be rounded to two significant digits for user convenience. The graphical scale element may also include display of a graphical icon including both a rectangle (with or without rounded corners) and an arrow.

As shown in the example of FIG. 2, the scale distance for viewport 200 is 11 miles (mi) (17.7 km), and the graphical icon includes a horizontally extending rectangle circumscribing a horizontally extending arrow. In some embodiments, the horizontal extension of the rectangle indicates that the orientation of the viewport 200 is horizontal in direction or landscape in shape. In certain embodiments, the horizontal extension of the arrow indicates that the orientation of the scale 204 is also horizontal or latitudinal. In further embodiments, the rectangle may be oriented in either a horizontal or vertical direction (indicating a portrait configuration). Similarly, the arrow may be oriented in either a horizontal or vertical direction (indicating a longitudinal scale configuration). While viewport 200 may be rectangular in shape, other computing device viewport shapes and corresponding orientation directions are contemplated.

As shown in FIG. 2, a horizontal scale 204 is measured from a left center midpoint of a viewport 200 to a right center midpoint of the viewport 200. In other embodiments, a vertical scale 214 is measured from a bottom center midpoint of the viewport 200 to a top center midpoint of the viewport 200. As shown in FIG. 2, the processor may measure a horizontal scale distance 204 from a left center midpoint 206 to a right center midpoint 208, and the processor may calculate and provide instructions to display the horizontal scale distance 204 as part of graphical element 202. The calculated distance from left center midpoint 206 to the right center midpoint 208 is 11 mi (17.7 km). Consistent with this embodiment, the processor may provide instructions to display a horizontally extending arrow indicating horizontal measurement from the left center midpoint 206 to the right center midpoint 208. Further, as shown in FIG. 2, the processor may provide instructions to display a horizontally extending rectangle indicating the landscape orientation of the viewport 200.

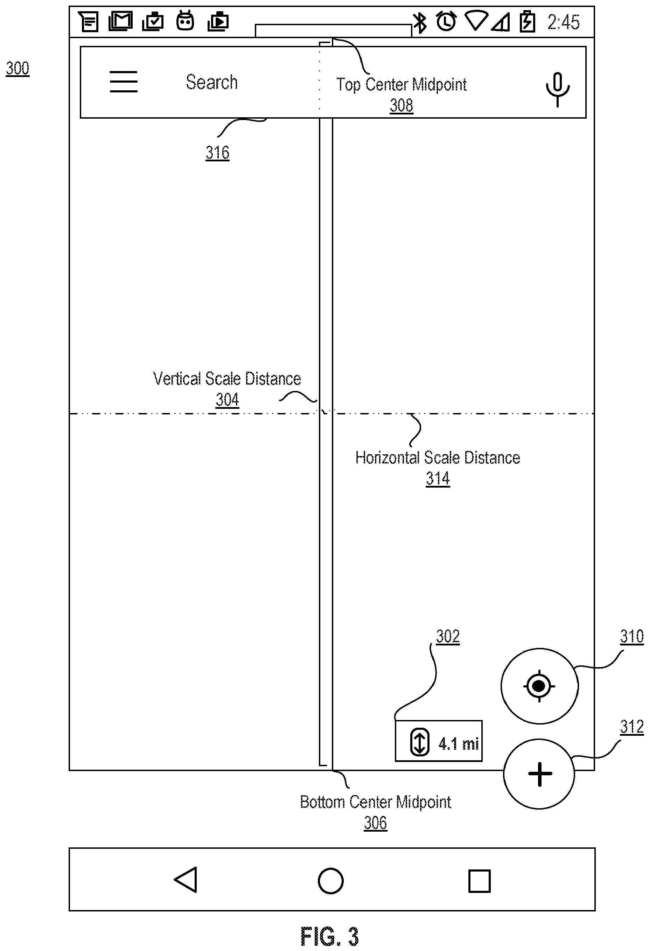

FIG. 3 illustrates a diagram of another example computing device viewport and graphical scale element, consistent with embodiments of the present disclosure. The exemplary computing device viewport 300 may include a screen and/or a graphical user interface (GUI) configured to include one or more graphical elements or icons for user selection or input. In some embodiments, viewport 300 may be configured to implement Google Maps or another digital mapping software application. For example, the GUI may include display of a web browser including a Google Maps search tool bar 316 configured to receive and process search queries related to displayed map data. The search tool bar 316 may allow for a user to search for a displayed map area for one or more landmarks, including but not limited to hotels, gas stations, etc.

In some embodiments, the GUI may include buttons 310 and 312 for user interaction or input. For example, upon user selection, button 310 may provide a prompt to a user asking for permission to access the current GPS location of a user device 101. In response to user approval, the processor may zoom the displayed map image to fit the map data within the boundaries of the computing device viewport 300, and may surround the map data around an origin aligned with the current geographic location of the user device 101. In some embodiments, selection of button 312 may provide a dialogue box to allow for entry of text indicating a desired zip code or geographic area, or a current address and an intended destination address. Entry of this information may be transmitted over network 150 to server 160 as a part of a request for map data.

In some embodiments, FIG. 3 may include a graphical scale element 302 that may be displayed in viewport 300. While graphical scale element 302 is shown in the bottom right corner of the viewport 300, it is contemplated that graphical scale element 302 may be positioned in any other corner of a GUI or may be displayed in any other predetermined or user specified position within viewport 300. In some embodiments, the graphical scale element 302 may include display of a scale distance value and associated measurement units, including standard and/or metric units. The scale distance value may be rounded to two significant digits for user convenience. The graphical scale element may also include display of a graphical icon including both a rectangle and arrow.

As shown in the example of FIG. 3, the scale distance for viewport 300 is 4.1 mi (6.6 km) and the graphical icon includes a vertically extending rectangle circumscribing a vertically extending arrow. In some embodiments, the vertical extension of the rectangle indicates that the orientation of the viewport 300 is vertical or portrait. Similarly, the vertical extension of the arrow indicates that the orientation of the scale 304 is also vertical or longitudinal. In further embodiments, the rectangle may be oriented in either a vertical or horizontal direction (indicating a landscape configuration). Similarly, the arrow may be oriented in either a vertical or horizontal direction (indicating a latitudinal scale configuration). While viewport 300 may be shown as rectangular in shape, other computing device viewport shapes and orientation directions are contemplated.

As shown in FIG. 3, a vertical scale 304 is measured from a bottom center midpoint of a viewport 300 to a top center midpoint of the viewport 300. In other embodiments, a horizontal scale 314 is measured from a left center midpoint of the viewport 300 to a right center midpoint of the viewport 300. As shown in FIG. 3, the processor may measure a vertical scale distance 304 from a bottom center midpoint 306 to a top center midpoint 308, and the processor may calculate and provide instructions to display the vertical scale distance 304 as part of graphical element 302. The calculated distance from the bottom center midpoint 306 to the top center midpoint 308 is 4.1 mi (6.6 km). Consistent with this embodiment, the processor may provide instructions to display a vertically extending arrow indicating measurement from the bottom center midpoint 306 to the top center midpoint 308. Further, as shown in FIG. 3, the processor may provide instructions to display a vertically extending rectangle indicating the portrait orientation of the viewport 300.

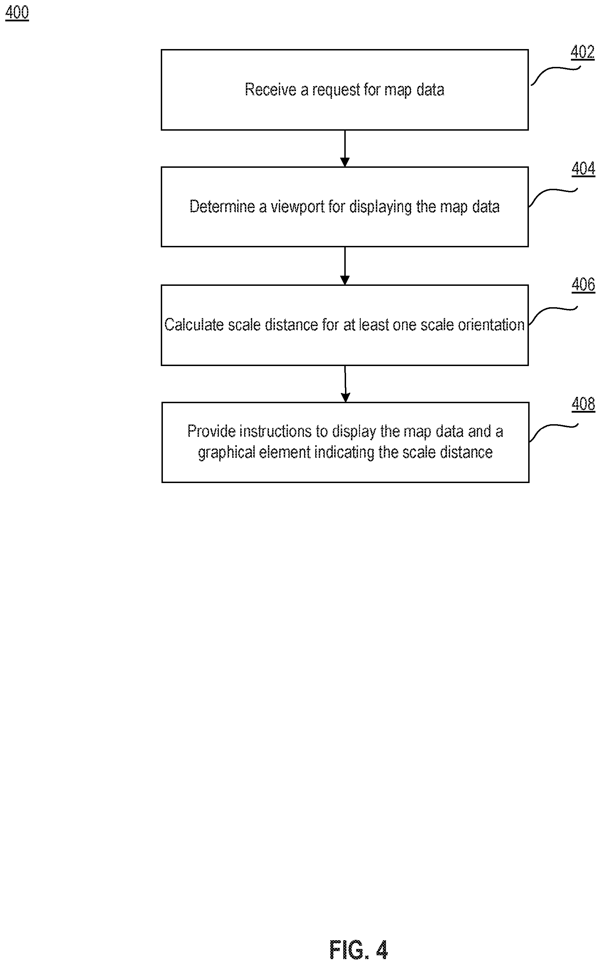

FIG. 4 illustrates a flowchart of a method to display a digital map and graphical scale element, consistent with embodiments of the present disclosure. While the exemplary process 400 is described herein as a series of steps, it is to be understood that the order of the steps may vary in other implementations. In particular, steps may be performed in any order, or in parallel.

At step 402, the processor may receive a request for digital map data. The map data may be associated with a geographic area. The request for map data may include a selection of one or more geographic tiers including a street view, city view, or a country view. In some embodiments, the request for map data may include a request based on a selection of button to use the current location of a user device 101. The request for map data may further include a request for at least one of a road map, satellite map, hybrid map, and terrain map. In some embodiments, the request for map data may be made according to a user selection on the graphical user interface and based on a location of a user or user device 101.

In some embodiments, the processor may determine the location of the user according to latitude or longitude (Lat/Lon) values based on a WGS84 standard. The processor may further determine the location of the user according to world coordinates indicating a specific point on a digital map provided from database 170. In other embodiments, the processor may determine the location of the user according to tile coordinates indicating a specific tile rendered on a digital map corresponding to a specified zoom level. In some embodiments, the request for map data may be sent to a web server or a map tile server, such as server 160. In certain embodiments, server 160 may then send a database query to database 170 to procure requested map data.

At step 404, the processor may determine a viewport for displaying the map data. The processor may identify viewport parameters according to an identified default scale. The default scale may be selected according to detection of at least one of the type of a user device, an orientation of the user device, and the request for map data. In some embodiments, server 160 may receive a device type identifier transmitted from as part of a packet of data from user device 101 over network 150. The device type identifier may include any alphanumeric identifier. In other embodiments, server 160 may receive an orientation of the user device 101 based on transmitted output from at least one of position or orientation sensors and/or camera images located on user device 101. Server 160 may further receive user input from at least one of piezoelectric sensors when a user touches a screen of user device in order to zoom in or zoom out of a map image displayed on a viewport. In some embodiments, server 160 may receive a request for map data from user device 101, triggering identification of viewpoint parameters including a default scale. The processor and/or server 160 may identify viewport parameters in conjunction with a viewport engine, and may determine a default scale based on receiving the device type identifier, an orientation of the user device, user input, and requested map data. In some embodiments, the processor may use certain algorithms such as a display and/or viewport indicator routine in order to determine the necessary viewport parameters for displaying the map image.

At step 406, the processor may calculate a scale distance for at least one scale orientation (e.g., a horizontal and/or vertical orientation). In some embodiments, upon identification of a default scale associated with determination of a required viewport and a corresponding scale orientation, the processor may calculate a scale distance based on a measurement from the center of a first edge to the center of a second edge of the determined viewport. The center of the first edge may be a left center midpoint and the center of the second edge may be a right center midpoint according to a horizontal scale orientation. In other embodiments, the center of the first edge may be a bottom center midpoint and the center of the second edge may be a top center midpoint according to a vertical scale orientation. The processor may compute the scale distance according to a difference in geocode, vectors, and/or according to coordinate differences identified in conjunction with mapping libraries accessed by Google Maps or other software mapping applications.

At step 408, the processor may provide instructions to display the map data and a graphical scale element overlay indicating the scale distance. In some embodiments, the processor may translate the latitude and longitude (Lat/Lon) values into world coordinates based on a Mercator projection. In other embodiments, the processor may convert the world coordinates based on the Mercator projection into corresponding pixel coordinate values based on a specified zoom level. In further embodiments, the processor may divide the digital map at each zoom level into a set of map tiles, and may translate the pixel coordinate values into a set of tiles for retrieval by a digital mapping application. According to these steps, the processor may provide instructions to display the map data and the associated graphical scale element indicating both the determined scale distance and scale orientation.

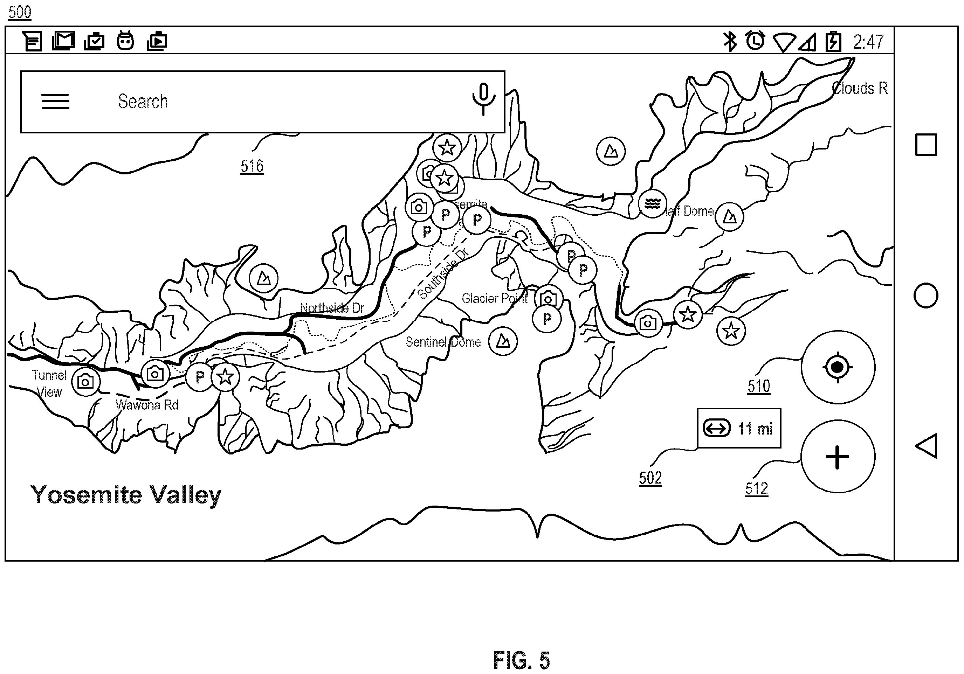

FIG. 5 illustrates a diagram of an example digital map including a graphical scale element, consistent with embodiments of the present disclosure. FIG. 5 illustrates an exemplary computing device viewport 500 analogous to viewport 200 (as shown in FIG. 2) including the display of requested map data and a graphical scale element specific to Yosemite Valley. In some embodiments, the graphical user interface (GUI) may include buttons 510 and 512 for user interaction or input. For example, upon user selection, button 510 may provide a prompt to a user asking for permission to access the current GPS location of a user device 101. In response to user approval, the processor may zoom the displayed map image of Yosemite Valley to fit within the boundaries of the computing device viewport 500. In some embodiments, selection of button 512 may provide a dialogue box to allow for entry of text indicating a desired zip code or geographic area, or a current location address and an intended destination address. Entry of this information may provide a user directional and other navigational information related to Yosemite Valley. Search bar 516 may further allow for entry of search queries related to Yosemite Valley. In further embodiments, other graphical icons and/or buttons, including stars and cameras displayed as indicators to describe and link to additional information related to displayed landmarks, are shown as contemplated in FIG. 5.

In some embodiments, FIG. 5 includes a graphical scale element 502 that may be displayed in viewport 500. While graphical scale element 502 is shown in the bottom right corner of the viewport 500, it is contemplated that graphical scale element 502 may be positioned in any other corner and/or displayed in any other user specified position within viewport 500. In some embodiments, the graphical scale element 502 may include display of a scale distance value and associated measurement units, including standard and/or metric units. The scale distance value may be rounded to two significant digits for user convenience. The graphical scale element may also include display of a graphical icon including both a rectangle and arrow.

As shown in the example of FIG. 5, the scale distance for viewport 500 is 11 mi (17.7 km), and the graphical icon includes a horizontally extending rectangle circumscribing a horizontally extending arrow. In some embodiments, the horizontal extension of the rectangle indicates that the orientation of the viewport 500 is horizontal in direction or landscape in shape. Similarly, the horizontal extension of the arrow indicates that the orientation of the scale (as shown in FIG. 2) is also horizontal or latitudinal.

Consistent with the embodiments of this disclosure, a user operating a smartphone 101-B may be traveling in Yosemite Valley and may be currently located proximate to Glacier Point (as shown in FIG. 5). The user may desire to travel from his or her current location to Wawona Rd. (as also shown in FIG. 5). In some instances, the user may not be aware if Wawona Rd. is within walking distance of Glacier Point and may also need directions to Wawona Rd. Accordingly, the user may operate his or her smartphone 101-B to submit a request for map data using a digital mapping application, such as Google Maps. In accordance with some embodiments, based on this request, smartphone 101-B may send an HTTP request over network 150 to a server 160. The smartphone 101-B may then receive a set of map tiles assembled into a singular digital map image corresponding to a location request indicative of the user's location within Yosemite Valley. The map image may then be displayed in a web browser within viewport 500 of the user device 101. The smartphone 101-B may also receive a graphical scale element 502 overlaid on the displayed map image.

In some embodiments, in order to render map data corresponding to Yosemite Valley, the processor may select a horizontal scale from a left center midpoint to a right center midpoint based on a determination of identified viewport parameters. Server 160 may determine that the user may be holding his smartphone 101-B in a horizontal orientation, and accordingly, may determine a horizontal scale orientation may be necessary to best render a digital map to the viewport 500. In some embodiments, the processor may subsequently calculate and display as a default graphical scale element setting the horizontal scale distance as part of the determined horizontal scale orientation. The processor may implement vector analysis and/or any other routines to calculate that the distance from a left center midpoint to a right center midpoint of viewport 500 is 11 mi (17.7 km), for example. In some embodiments, the processor may provide instructions to display a horizontally extending arrow indicating measurement from the left center midpoint to the right center midpoint. Further, as shown in FIG. 5, the processor may provide instructions to display a horizontally extending rectangle indicating the landscape orientation of the viewport 500 of the user device 101 located in Yosemite Valley.

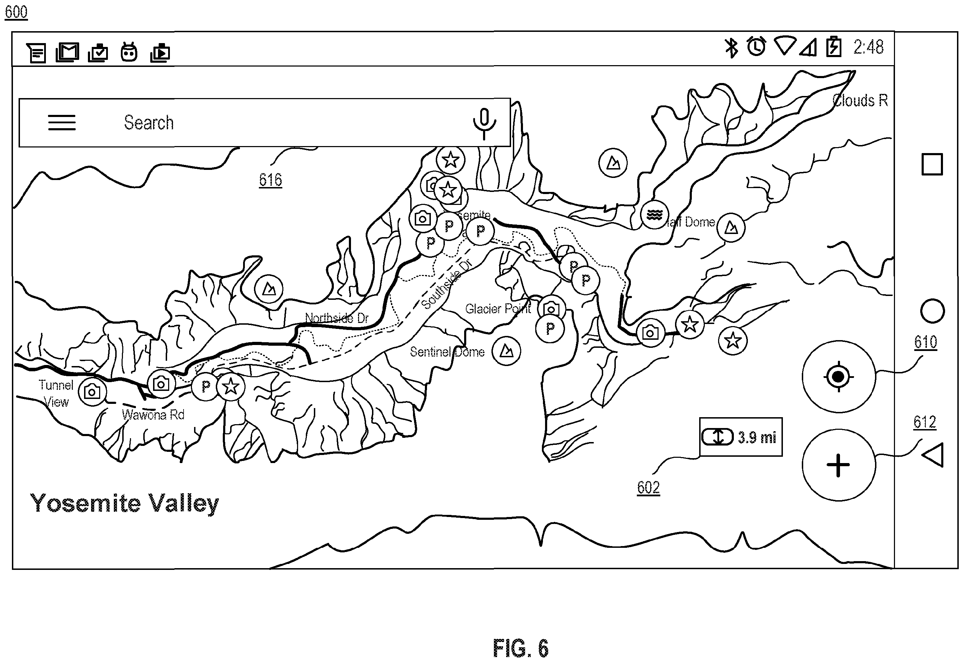

In some embodiments, based upon receiving the display of the scale distance, scale orientation, and device orientation as part of the graphical scale element 502, the user may then be able to determine directions to Wawona Rd. and assess whether it is within walking distance of Glacier Point. Specifically, the user may be able to accurately estimate the distance between these two geographic landmarks positioned or spaced apart horizontally on the map image. As shown in FIG. 5, the horizontal span of the viewport map image constitutes 11 mi (17.7 km) in total. Accordingly, the user may accurately estimate (without use of his or her fingers) that the horizontal distance between Glacier Point and Wawona Rd is approximately 5 mi (8.05 km). The user may also accurately estimate, based on the rendered map image, that Glacier Point and Wawona Rd. are located at different latitudes. Therefore, the user may realize that the distance between Glacier Point and Wawona Rd. is longer than 5] mi (8.05 km). However, the user may first need to determine the vertical span of the viewport map image (as described in FIG. 6 below) in order to make an accurate estimate of the precise distance between Glacier Point and Wawona Rd.

FIG. 6 illustrates a diagram of another example digital map including a graphical scale element, consistent with embodiments of the present disclosure. FIG. 6 illustrates an exemplary computing device viewport 600 and map image identical to viewport 500 and map image (as shown in FIG. 5) for Yosemite Valley. The graphical user interface (GUI) includes buttons 610 and 612 for user interaction or user input. For example, upon user selection, button 610 may provide a prompt to a user asking for permission to access the current GPS location of a user device 101. In response to user approval, the processor may zoom the displayed map of Yosemite Valley to fit within the boundaries of the computing device viewport 600. In some embodiments, selection of button 612 may provide a dialogue box to allow for entry of text indicating a desired zip code or geographic location, or a current location address and an intended destination address. As in FIG. 6, entry of this information may provide a user directional and other navigational information related to Yosemite Valley. Search bar 616 may allow for search queries related to Yosemite Valley.

In some embodiments, FIG. 6 includes a graphical scale element 602 that may be displayed in viewport 600. As shown in FIG. 6, the scale distance and scale orientation of graphical scale element 602 is different than the scale distance and scale orientation of graphical scale element 502 as shown in FIG. 5. Specifically, the scale distance for viewport 600 is now displayed as 3.9 :mi (6.3 km), and the graphical icon now includes a vertically extending arrow, while still including a horizontally extending rectangle circumscribing the new vertically extending arrow. The horizontal extension of the rectangle indicates that the orientation of the viewport 600 has remained in a landscape configuration. However, the vertical extension of the arrow indicates that the orientation of the scale is now vertical or longitudinal (as shown in FIG. 3). Accordingly, a new scale measurement reflective of the new scale is now calculated at 3.9 mi (6.3 km).

In some embodiments, in order to render map data corresponding to Yosemite Valley, the processor may select a vertical scale from a bottom center midpoint to a top center midpoint based on a determination of identified viewport parameters. Server 160 may determine that the user may still be holding his or her smartphone in a horizontal orientation. However, the processor may determine the user has selected the graphical scale element 502 in order to specifically request calculation and display of a vertical scale distance in new graphical scale element 602. Accordingly, the processor may determine a vertical scale orientation is required to render new graphical scale element 602. In some embodiments, the processor may subsequently calculate and display the vertical scale distance as part of the determined vertical scale orientation. The processor may implement vector analysis to calculate that the distance from a bottom center midpoint to a top center midpoint at 3.9 mi (6.3 km), for example. In some embodiments, the processor may provide instructions to display a vertically extending arrow indicating measurement from the bottom center midpoint to the top center midpoint. Further, as shown in FIG. 6, the processor may provide instructions to display a horizontally extending rectangle indicating the maintained landscape orientation of the viewport 600 of the user device 101 located in Yosemite Valley.

In some embodiments, based upon receiving display of the scale distance, scale orientation, and device orientation as part of the graphical scale element 602, the user may be able to determine directions to Wawona Rd. and assess whether it is within walking distance of Glacier Point. Specifically, the user may be able to accurately estimate the longitudinal distance between these two landmarks positioned or spaced apart vertically on the map image. As shown in FIG. 6, the vertical span of the map image constitutes 3.9 mi (6.3 km) in total. Accordingly, the user may accurately estimate that the vertical distance between Glacier Point and Wawona Rd is approximately 1/2 mi (0.8 km). The user may already know (as described with reference to FIG. 5) that Glacier Point and Wawona Rd are located at a horizontal distance of 5 mi (8.0 km). Therefore, the user may estimate, according to his or her own faculties, or precisely according to the Pythagorean theorem, that the distance between Glacier Point and Wawona Rd. is the ((5)2 + (.5)2) = 5.02 miles (8.08 km). While not shown, it is contemplated that graphical scale element 602 may display an exact distance between two landmarks. Alternatively, a user may toggle back and forth between a horizontal scale distance and vertical scale distance as desired.

In some embodiments, when the user selects the graphical element 502 (as shown in FIG. 5), the processor toggles and displays the graphical element 602 (as shown in FIG. 6) as well as the new calculated scale distance and new vertical scale orientation. Similarly, when the user selects the graphical element 602, the processor may re-calculate and re-display the graphical scale element 502 as well as the horizontal scale distance and scale orientation. Further, in other embodiments, while the processor (with reference to FIG. 6) maintained a horizontally extending rectangle, upon a detected change in orientation of a user device 101, the rectangle may also be displayed in a portrait orientation. Both horizontal and vertical orientation of rectangles and arrows are contemplated.

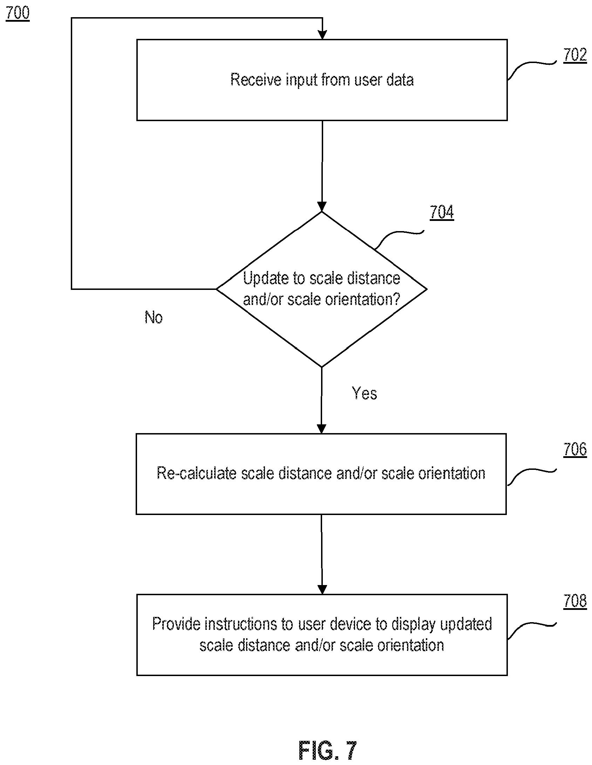

FIG. 7 illustrates a flowchart of an example method to update a graphical scale element, consistent with embodiments of the present disclosure. While the exemplary process 700 is described herein as a series of steps, it is to be understood that the order of the steps may vary in other implementations. In particular, steps may be performed in any order, or in parallel.

At step 702, the processor may receive input for user data. The processor may receive a change in input for user data based on a change to at least one of the geographic area, type of the user device, orientation of the user device, and user input including the request for map data. In some embodiments, the processor may detect a change in the geographic area based on at least one of GPS, GLONASS, or other global navigation satellite systems (GNSS). The processor may detect a change in the type of the user device based on receiving a device type identifier transmitted along with the request for map data. In other embodiments, the processor may detect a change in the orientation of the user device based on at least one of position or orientation sensors and camera images. The processor may detect a change in the user input at the graphical user interface based on at least one of piezoelectric sensors and a comparison of the user input to historical user input data. In further embodiments, the change in user input may include a change in a zoom level, a change in time spent by the user viewing the viewport, or a change in the number of search queries conducted in the search tool bar displayed in the viewport of a user device 101.

At step 704, the processor may determine whether or not to update the scale distance and/or the scale orientation based on any of the aforementioned detected changes. In some embodiments, the processor may determine not to change but rather to retain the default scale and preserve the current scale distance. In other embodiments, the processor may determine to change or update the scale distance and/or orientation. Where there are no detected changes requiring update to scale distance and/or orientation, server 160 may continue to receive input from the user data (at step 702) for further analysis. Where there are detected changes requiring update to scale distance and/or orientation, the processor may recalculate (and proceed to step 706). Consistent with this disclosure, an update routine and/or algorithm may be contemplated to conduct analysis of detected changes.

At step 706, the processor may re-calculate scale distance and/or scale orientation. The processor first determines the scale orientation based on the measurement from the center of a first edge to the center of the second edge of the determined viewport, in some embodiments according to identified viewport parameters. The processor may subsequently update the scale orientation based on a user or "toggle" selection of the graphical scale element, or based on a change to at least one of the geographic area, type of the user device, orientation of the user device, and user input including the request for map data. In certain embodiments, based on the new scale orientation, the processor may then recalculate the scale distance and/or scale orientation for display to a user. For example, the processor may update the scale orientation every time the map view is panned to a new location and/or when the map is zoomed in or out according to one or more viewport identifiers. In other embodiments, when the graphical scale element is touched or clicked, the processor may provide instructions to re-calculate and display the distance from two new midpoints.

At step 708, the processor may provide instructions to the user device 101 to display an updated scale distance and/or scale orientation. The processor may transmit instructions from server 160 across network 150 to the user device 101 to display the updated scale distance and/or scale orientation as part of a new overlaid graphical scale element on the digital map image displayed in the viewport of the user device 101. In other embodiments, the direction of the graphical rectangular icon and/or the graphical arrow may change consistent with display of a new scale distance and/or new scale orientation.

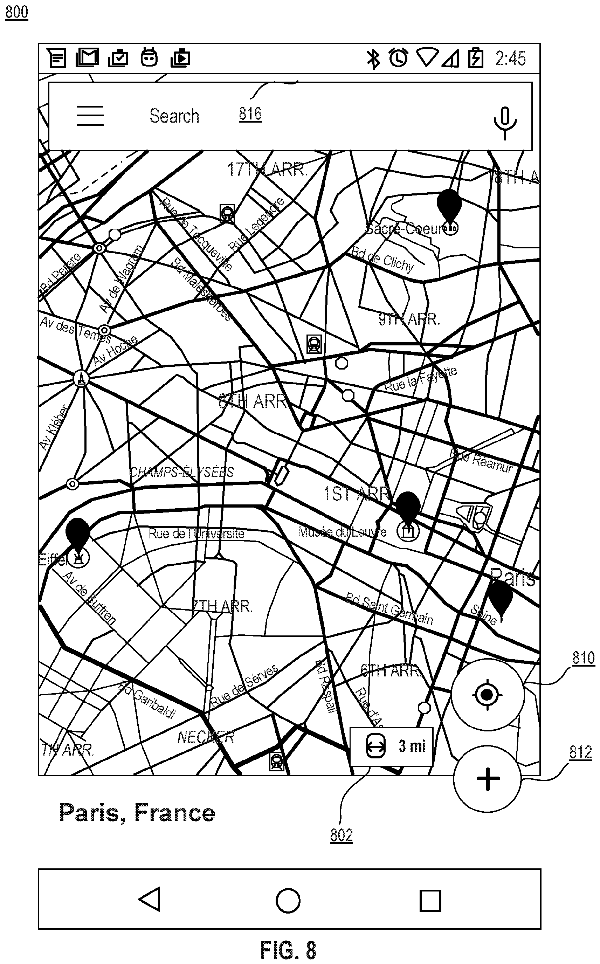

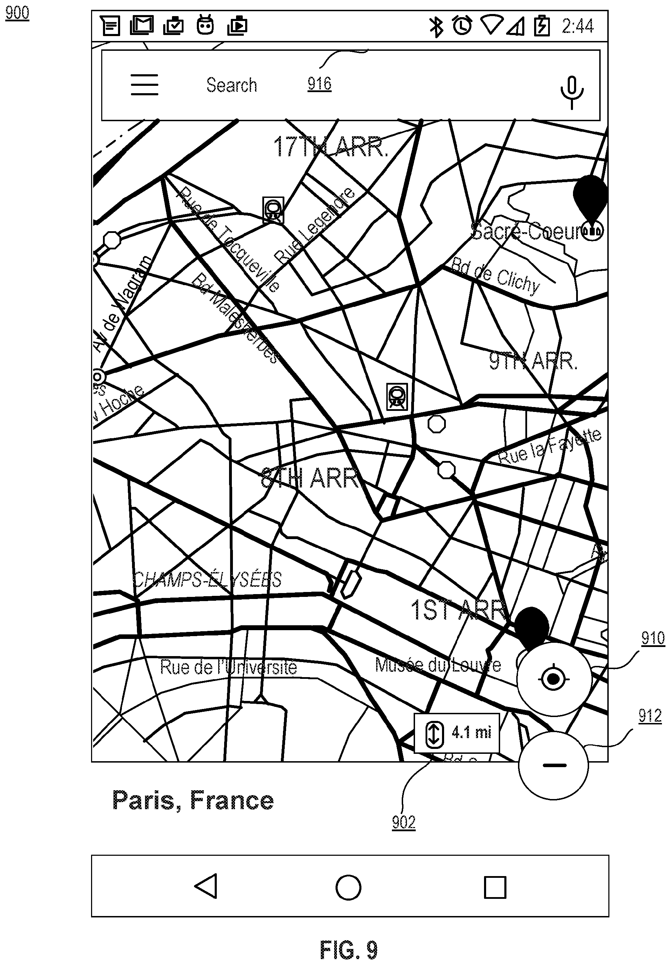

FIG. 8 illustrates a diagram of a still further example of a digital map of a including a graphical scale element, consistent with embodiments of the present disclosure. FIG. 8 illustrates an exemplary computing device viewport 800 including a map image of downtown Paris. The graphical user interface includes buttons 810 and 812 for user interaction or user input. For example, upon user selection, button 810 may provide a prompt to a user asking for permission to access the current GPS location of a user device 101. In response to user approval, the processor may zoom to the displayed map of Paris to fit it within the boundaries of the computing device viewport 800 (further described with reference to FIG. 9). In some embodiments, selection of button 812 may provide a dialogue box to allow for entry of text indicating a current location address and an intended destination address. Entry of this information may provide a user directional and other navigational information related to Paris. Search bar 816 may further allow for search queries related to Paris.

In some embodiments, FIG. 8 includes a graphical scale element 802 that may be displayed in viewport 800. As shown in FIG. 8, the scale distance and scale orientation is different than the scale distance and scale orientation as shown in FIG. 6 for Yosemite Valley. Specifically, the scale distance for viewport 800 is now 3 2. mi (4.8 km), and the graphical icon includes a horizontally extending arrow, while including a vertically extending rectangle circumscribing the horizontally extending arrow. The vertical extension of the rectangle indicates that the orientation of the viewport 800 as portrait in shape. However, the horizontal extension of the arrow indicates that the orientation of the scale is now horizontal or latitudinal. Accordingly, a new scale measurement measuring a horizontal span of the map image is calculated at 3.0 mi (4.8 km) for Paris.

Consistent with embodiments of the present disclosure, a user operating a smartphone 101-B may be traveling in downtown Paris and may be currently located proximate to a landmark located on the Champs-Élysées (as shown in FIG. 8). The user may desire to travel from his or her current location to the Musée du Louvre (as shown in FIG. 8). In some embodiments, the user may not be aware if the Musée du Louvre is within walking distance of the Champs-Élysées and may also need directions to the Musée du Louvre. Accordingly, the user may operate his or her smartphone 101-B to submit a request for map data using a digital mapping application, such as Google Maps. Based on this this request, smartphone 101-B may send an HTTP request over network 150 to a server 160. In accordance with some embodiments, the smartphone 101-B may then receive a set of map tiles assembled into a singular digital map image corresponding to a location request indicative of the user's location at a landmark on the Champs-Élysées in Paris. The map image may be displayed in a web browser within viewport 800 of the user device 101. The smartphone 101-B may further receive a graphical scale element 802 overlaid on the map image.

In some embodiments, in order to render map data corresponding to Paris, the processor may select a horizontal scale from a left center midpoint to a right center midpoint based on a determination of identified viewport parameters. Server 160 may determine that the user may be holding his smartphone 101-B in a vertical orientation. Based on user input, server 160 may determine that the user requires a horizontal scale measurement, and accordingly, may determine a horizontal scale orientation may be best to render the digital map image in conjunction with a portrait device orientation. In some embodiments, the processor may subsequently calculate and display as a default geographical scale element setting the horizontal scale distance as part of the determined horizontal scale orientation. The processor may implement vector analysis or any other computation to calculate that the distance from a left center midpoint to a right center midpoint is 3 mi. In some embodiments, the processor may also display a horizontally extending arrow indicating measurement from the left center midpoint to the right center midpoint. Further, as shown in FIG. 8, the processor may display a vertically extending rectangle indicating the portrait orientation of the viewport 800 of the user device 101 located in Paris.

In some embodiments, based upon receiving display of the scale distance, scale orientation, device orientation, and user input as part of the graphical scale element 802, the user may be able to determine directions to the Musée du Louvre and assess whether it is within walking distance of the Champs-Élysées. Specifically, the user may be able to accurately estimate the distance between his current location and the Musée du Louvre as positioned or spaced apart horizontally on the map image. As shown in FIG. 8, the horizontal span of the viewport constitutes 3 mi (4.8 km) in total. Accordingly, the user may accurately estimate that the horizontal distance between his location on the Champs-Élysées and the Musée du Louvre is approximately 1 mi. The user may also accurately estimate, based on the rendered map image, that the Champs-Élysées and Musee du Louvre are located at different latitudes. Therefore, the user may realize that the distance between the Champs-Élysées and the Musée du Louvre is longer than 1 mi (1.6 km). However, the user may first need to determine the vertical span of the viewport (as described in FIG. 9 below) in order to make an accurate estimate of the precise distance between the user's location on the Champs-Élysées and the Musée du Louvre.

FIG. 9 illustrates a diagram of another example digital map including a graphical scale element, consistent with embodiments of the present disclosure. FIG. 9 illustrates an exemplary computing device viewport 900. As shown in FIG. 9, the viewport 900 includes a map image of Paris that is zoomed-in. While not shown, viewport 900 may also include a map image of Paris zoomed-out or panned to focus on a different portion of Paris. The graphical user interface (GUI) includes buttons 910 and 912 for user interaction or user input. For example, upon user selection, button 910 may provide a prompt to a user asking for permission to access the current GPS location of a user device 101. In response to user approval, the processor may zoom the displayed map to fit the map image of Paris to the boundaries of the computing device viewport 900 (as shown in FIG. 9). In some embodiments, selection of button 912 may provide a dialogue box to allow for entry of text indicating a current location address and a destination address. Entry of this information may provide a user directional and other navigational information related to Paris. Search bar 916 may further allow for search queries related to Paris.

In some embodiments, FIG. 9 includes a graphical scale element 902 that may be displayed in viewport 900. As shown in FIG. 9, the scale distance and scale orientation of graphical scale element 902 is different than the scale distance and scale orientation of graphical scale element 802 as shown in FIG. 8 for Paris. Specifically, the scale distance for viewport 900 is now displayed as 4.1 mi (6.6 km), and the graphical icon includes a vertically extending arrow, while still including a vertically extending rectangle circumscribing the vertically extending arrow (since the orientation of the user device has not changed). The vertical extension of the rectangle indicates that the orientation of the viewport 900 as portrait in shape. However, the vertical extension of the arrow indicates that the orientation of the scale is now vertical or longitudinal. Accordingly, a new scale measurement reflective of the new scale is calculated at 4.1 mi (6.6 km) for Paris (as shown in FIG. 9). In addition to selection of the zoomed-in map image, the user may have selected graphical element 802 in order to display the new graphical element 902 with the new scale orientation and distance (as shown in FIG. 9).

In some embodiments, in order to render map data corresponding to downtown Paris, the processor may select a vertical scale from a bottom center midpoint to a top center midpoint based on a determination of identified viewport parameters. Server 160 may determine that the user may still be holding his smartphone in a vertical orientation. However, the processor may determine that the user may have selected the graphical scale element 802 in order to specifically request calculation and display of a vertical scale distance in graphical scale element 902. Accordingly, the processor may determine a vertical scale orientation is required to render the new scale distance. The processor may also determine based on user input that the user requires a zoomed-in viewport.

In some embodiments, the processor may subsequently calculate and display the vertical scale distance as part of the determined vertical scale orientation. The processor may implement vector analysis and/or any other routine to calculate that the distance from a bottom center midpoint to a top center midpoint is 4.1 mi for the zoomed-in viewport 900. In some embodiments, the processor may display a vertically extending arrow indicating measurement from the bottom center midpoint to the top center midpoint. Further, as shown in FIG. 9, the processor may display a vertically extending rectangle indicating the portrait orientation of the viewport 900 of the user device 101 in Paris.

In some embodiments, based upon receiving display of the scale distance, scale orientation, device orientation, and zoomed-in user input as part of the graphical scale element 902, the user may be able to determine directions to the Musée du Louvre and assess whether it is in walking distance of current his location on the Champs-Élysées. Specifically, the user may be able to accurately estimate the distance between his location and the Musée du Louvre positioned or spaced apart vertically on the map image. As shown in FIG. 9, the vertical span of the zoomed-in viewport constitutes 4.1 mi (6.6 km) in total. Accordingly, the user may accurately estimate that the vertical distance between the Champs-Elysees and the Musée du Louvre is approximately 1/2 mi (0.80 km). The user may already know (as described with reference to FIG. 8) that the Champs-Élysées and the Musée du Louvre are located at a horizontal distance of 1 mi. Therefore, the user estimate based on his own faculties, or according to the Pythagorean theorem, that the nearest distance between the Champs-Élysées and the Musée du Louvre is √ ((1)2 + (.5)2) = 1.12 : miles (1.8 km). While not shown, it is contemplated that graphical scale element 902 may display an exact distance between these two locations. Alternatively, a user may toggle back and forth between a horizontal scale distance and vertical scale distance as desired by selection of graphical scale elements 802 and 902.

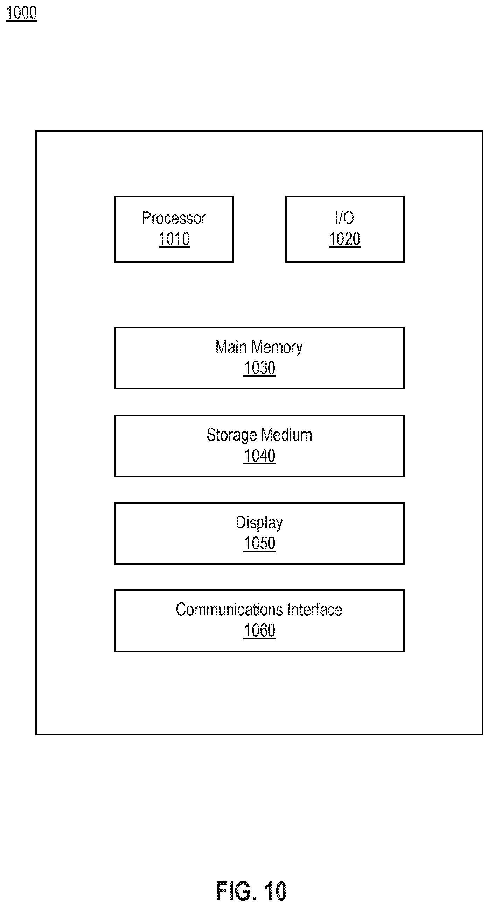

FIG. 10 illustrates an example user device 1000 for implementing embodiments of the present disclosure. User device 1000 may be implemented as a computing device that includes a processor 1010, input/output 1020, main memory 1030, storage medium 1040, display 1050, and communications interface 1060.

FIG. 10 is a block diagram of an exemplary electronic apparatus or system 1000 for implementing embodiments and features of the present disclosure. By way of example, apparatus or system 1000 may be used to implement user devices 101 and/or server 160 of FIG. 1. The arrangement and number of components in system 1000 is provided for purposes of illustration. Additional arrangements, number of components, and other modifications may be made, consistent with the present disclosure.

As shown in FIG. 10, system 1000 may include one or more processors 1010 for executing instructions. System 1000 may also include one or more input/output (I/O) devices 1020. By way of example, I/O devices 1020 may include physical keyboards, virtual touch-screen keyboards, mice, joysticks, styluses, etc. In certain embodiments, system 1000 may also be capable of receiving input through a microphone (not shown) using, for example, voice recognition applications.

As further illustrated in FIG. 10, system 1000 may include one or more storage devices configured to store data and/or software instructions used by the one or more processors 1010 to perform operations consistent with disclosed embodiments. For example, system 1000 may include main memory 1030 configured to store one or more software programs that performs functions or operations when executed by the one or more processors 1010. By way of example, main memory 1030 may include NOR or NAND flash memory devices, Read Only Memory (ROM) devices, Random Access Memory (RAM) devices, etc. System 1000 may also include storage medium 1040. By way of example, storage medium 1040 may include hard drives, solid-state drives, tape drives, RAID arrays, etc. Although FIG. 10 shows only one main memory 1030 and one storage medium 1040, system 100 may include any number of main memories 1030 and storage mediums 1040. Further, although FIG. 10 shows main memory 1030 and storage medium 1040 as part of system 1000, main memory 1030 and/or storage medium 1040 may be located remotely and system 1000 may be able to access main memory 1030 and/or storage medium 1040 via network 150.

System 1000 may also include one or more displays 1050 for displaying data and information. Display 1050 may be implemented using devices or technology, such as a cathode ray tube (CRT) display, a liquid crystal display (LCD), a plasma display, a light emitting diode (LED) display, a touch screen type display, and/or any other type of display known in the art.

System 1000 may also include one or more communications interfaces 1060. Communications interface 1060 may allow software and data to be transferred between system 1000, network 150, user devices 101, and/or other components. Examples of communications interface 1060 may include a modem, a network interface (e.g., an Ethernet card), a communications port, a PCMCIA slot and card, etc. Communications interface 1060 may transfer software and data in the form of signals, which may be electronic, electromagnetic, optical, or other signals capable of being received by communications interface 1060. These signals may be provided to communications interface 1060 via a communications path (not shown), which may be implemented using wire, cable, fiber optics, radio frequency ("RF") link, and/or other communications channels.

The disclosed embodiments are not limited to separate programs or computers configured to perform dedicated tasks. For example, server 160 may include main memory 1030 that stores a single program or multiple programs. Additionally, server 160 may execute one or more programs located remotely from server 160. For example, server 160 may access one or more remote programs stored in main memory 1030 included within a component, for example, user devices 101 that, when executed, perform operations consistent with the disclosed embodiments. In some exemplary embodiments, server 160 may be capable of accessing separate web server(s) or computing devices that generate, maintain, and provide web site(s), mapping data, and/or graphical scale elements. User devices 101 may function in a manner similar to server 160 and vice versa.

In this disclosure, various embodiments have been described with reference to the accompanying drawings and embodiments. It will, however, be evident that various modifications and changes may be made thereto, and additional embodiments may be implemented, without departing from the present disclosure. The specification and drawings are accordingly to be regarded in an illustrative rather than a restrictive sense.

For example, advantageous results may still be achieved if steps of the disclosed methods were performed in a different order and/or if components in the disclosed systems were combined in a different manner and/or replaced or supplemented by other components. Other implementations are also within the scope of the present disclosure.

It is to be understood that both the foregoing general description are exemplary only, and are not restrictive. Further, the accompanying drawings, which are incorporated in and constitute a part of this specification, illustrate embodiments of the present disclosure and together with the description, are similarly not restrictive.

## Claims

1. A computer-implemented system comprising:
a computer-readable medium that stores instructions; and
at least one processor configured to execute the instructions to:
receive a request for map data, the map data being associated with a geographic area;
determine a viewport (300) for displaying the map data on a user device;
calculate a scale distance (204, 304) based on a measurement from the center of a first edge (206, 306) to the center of a second edge (208, 308) of the determined viewport;
determine a scale orientation based on the measurement from the center of the first edge to the center of the second edge of the determined viewport; and
provide, to the user device, the requested map data and instructions for displaying the map data, wherein the instructions include instructions to display a graphical element (202, 302) specifying the scale distance and the scale orientation in at least one of a horizontal or vertical direction.

2. The computer-implemented system according to claim 1, wherein the at least one processor is further configured to:
re-calculate the scale distance, based on a change to at least one of the geographic area, orientation of the user device, and user input.

3. The computer-implemented system according to claim 1, wherein the at least one processor is further configured to:
update the scale orientation, based on a selection of the graphical element or a change to at least one of the geographic area, orientation of the user device, and user input.

4. The computer-implemented system according to claim 3, wherein the at least one processor is further configured to:
provide instructions to display the updated scale orientation as part of the graphical element.

5. The computer-implemented system according to claim 1, wherein the at least one processor is further configured to:
identify viewport parameters according to a default scale, the default scale being selected according to at least one of the type of a user device, an orientation of the user device, and the request for the map data.

6. The computer-implemented system according to claim 1, wherein the graphical element further specifies an orientation of the viewport in addition to the scale distance and the scale orientation in at least one of a horizontal or vertical direction.

7. The computer-implemented system according to claim 1, wherein the at least one processor is further configured to:
detect a change in the type of the user device based on receiving a device type identifier transmitted along with the request for map data.

8. The computer-implemented system according to claim 1, wherein the at least one processor is further configured to:
detect a change in the orientation of the user device based on at least one of position or orientation sensors and camera images.

9. The computer-implemented system according to claim 1, wherein the at least one processor is further configured to:
detect a change in the user input at the graphical user interface based on at least one of piezoelectric sensors and a comparison of the user input to historical user input data.

10. The computer-implemented system according to claim 9, wherein the change in the user input at the graphical user interface comprises a change in a zoom level, a change in time spent by the user viewing the viewport, or a change in the number of search queries conducted in the viewport.

11. The computer-implemented system according to claim 1, wherein
the center of the first edge is a left center midpoint and the center of the second edge is a right center midpoint, and wherein the scale orientation is horizontal; or
the center of the first edge is a bottom center midpoint and the center of the second edge is a top center midpoint, and wherein the scale orientation is vertical.

12. The computer-implemented system according to claim 1, wherein the at least one processor is further configured to:
request map data including at least one of a roadmap, satellite map, hybrid map, and terrain map based on a location of a user.

13. The computer-implemented system according to claim 12, wherein the at least one processor is further configured to:
determine the location of the user according to latitude and longitude (Lat/Lon) values based on a WGS84 standard, world coordinates indicating a specific point on the digital map, and tile coordinates indicating a specific tile on the digital map at a specific zoom level; and optionally
the at least one processor is further configured to:
translate the latitude and longitude (Lat/Lon) values into world coordinates based on a Mercator projection; and
convert the world coordinates based on the Mercator projection into corresponding pixel coordinate values based on the specific zoom level; and optionally the at least one processor is further configured to:
divide the digital map at each zoom level into a set of map tiles; and
translate the pixel coordinate values into a set of tiles for retrieval by a digital mapping application.

14. A non-transitory, computer readable medium storing instructions configured to cause at least one processor to perform operations comprising:
receiving a request for map data, the map data being associated with a geographic area;
determining a viewport : (300) for displaying the map data on a user device;
calculating a scale distance (204, 304) based on a measurement from the center of a first edge 1 (206, 306) to the center of a second edge (208, 308) of the determined viewport;
determining a scale orientation based on the measurement from the center of the first edge to the center of the second edge of the determined viewport; and
providing, to the user device, the requested map data and instructions for displaying the map data, wherein the instructions include instructions to display a graphical element (202,302) specifying the scale distance and the scale orientation in at least one of a horizontal or vertical direction.

15. A computer-implemented method comprising the following operations performed by one or more processors:
receiving a request for map data, the map data being associated with a geographic area;
determining a viewport (300) for displaying the map data on a user device;
calculating a scale distance (204, 304) based on a measurement from the center of a first edge (206, 306) to the center of a second edge (208, 308) of the determined viewport;
determining a scale orientation based on the measurement from the center of the first edge to the center of the second edge of the determined viewport; and
providing, to the user device, the requested map data and instructions for displaying the map data, wherein the instructions include instructions to display a graphical element (202, 302) specifying the scale distance and the scale orientation in at least one of a horizontal or vertical direction.

## Patentansprüche

1. Computerimplementiertes System, umfassend:
ein computerlesbares Medium, das Anweisungen speichert; und
mindestens einen Prozessor, der dazu konfiguriert ist, die Anweisungen auszuführen zum:
Empfangen einer Anforderung von Kartendaten, wobei die Kartendaten mit einem geografischen Gebiet assoziiert sind;
Bestimmen eines Viewports (300) zum Anzeigen der Kartendaten auf einer Benutzervorrichtung;
Berechnen einer Maßstabsentfernung (204, 304) auf der Basis einer Messung von dem Zentrum eines ersten Rands (206, 306) zu dem Zentrum eines zweiten Rands (208, 308) des bestimmten Viewports;
Bestimmen einer Maßstabsausrichtung auf der Basis der Messung von dem Zentrum des ersten Rands zu dem Zentrum des zweiten Rands des bestimmten Viewports und
Bereitstellen der angeforderten Kartendaten und Anweisungen zum Anzeigen der Kartendaten an die Benutzervorrichtung, wobei die Anweisungen Anweisungen zum Anzeigen eines grafischen Elements (202, 302) beinhalten, das die Maßstabsentfernung und die Maßstabsausrichtung in mindestens einer von einer horizontalen oder einer vertikalen Richtung spezifiziert.

2. Computerimplementiertes System nach Anspruch 1, wobei der mindestens eine Prozessor weiterhin konfiguriert ist zum:
erneuten Berechnen der Maßstabsentfernung auf der Basis einer Änderung von mindestens einem bzw. einer von dem geografischen Gebiet, einer Ausrichtung der Benutzervorrichtung und einer Benutzereingabe.

3. Computerimplementiertes System nach Anspruch 1, wobei der mindestens eine Prozessor weiterhin konfiguriert ist zum:
Aktualisieren der Maßstabsausrichtung auf der Basis einer Auswahl des grafischen Elements oder einer Änderung von mindestens einem bzw. einer von dem geografischen Gebiet, einer Ausrichtung der Benutzervorrichtung und einer Benutzereingabe.

4. Computerimplementiertes System nach Anspruch 3, wobei der mindestens eine Prozessor weiterhin konfiguriert ist zum:
Bereitstellen von Anweisungen zum Anzeigen der aktualisierten Maßstabsausrichtung als Teil des grafischen Elements.

5. Computerimplementiertes System nach Anspruch 1, wobei der mindestens eine Prozessor weiterhin konfiguriert ist zum:
Identifizieren von Viewport-Parametern gemäß einem Standardmaßstab, wobei der Standardmaßstab gemäß mindestens einem bzw. einer von dem Typ einer Benutzervorrichtung, einer Ausrichtung der Benutzervorrichtung und der Anforderung der Kartendaten ausgewählt ist.

6. Computerimplementiertes System nach Anspruch 1, wobei das grafische Element zusätzlich zu der Maßstabsentfernung und der Maßstabsausrichtung in mindestens einer von einer horizontalen oder einer vertikalen Richtung weiterhin eine Ausrichtung des Viewports spezifiziert.

7. Computerimplementiertes System nach Anspruch 1, wobei der mindestens eine Prozessor weiterhin konfiguriert ist zum:
Erfassen einer Änderung des Typs der Benutzervorrichtung auf der Basis eines Empfangens einer Vorrichtungstypkennung, die zusammen mit der Anforderung von Kartendaten übertragen wird.

8. Computerimplementiertes System nach Anspruch 1, wobei der mindestens eine Prozessor weiterhin konfiguriert ist zum:
Erfassen einer Änderung der Ausrichtung der Benutzervorrichtung auf der Basis von mindestens einem von Positions- oder Ausrichtungssensoren und Kamerabildern.

9. Computerimplementiertes System nach Anspruch 1, wobei der mindestens eine Prozessor weiterhin konfiguriert ist zum:
Erfassen einer Änderung der Benutzereingabe an der grafischen Benutzeroberfläche auf der Basis von mindestens einem von piezoelektrischen Sensoren und einem Vergleich der Benutzereingabe mit historischen Benutzereingabedaten.

10. Computerimplementiertes System nach Anspruch 9, wobei die Änderung der Benutzereingabe an der grafischen Benutzeroberfläche eine Änderung einer Zoomstufe, eine Änderung der Zeit, die der Benutzer damit verbringt, den Viewport zu betrachten, oder eine Änderung der Anzahl von Suchanfragen, die in dem Viewport vorgenommen werden.

11. Computerimplementiertes System nach Anspruch 1, wobei
das Zentrum des ersten Rands ein linker Zentrumsmittelpunkt ist und das Zentrum des zweiten Rands ein rechter Zentrumsmittelpunkt ist und wobei die Maßstabsausrichtung horizontal ist; oder
das Zentrum des ersten Rands ein unterer Zentrumsmittelpunkt ist und das Zentrum des zweiten Rands ein oberer Zentrumsmittelpunkt ist und wobei die Maßstabsausrichtung vertikal ist.

12. Computerimplementiertes System nach Anspruch 1, wobei der mindestens eine Prozessor weiterhin konfiguriert ist zum:
Anfordern von Kartendaten, die mindestens eine von einer Straßenkarte, Satellitenkarte, Hybridkarte und Geländekarte auf der Basis eines Standorts eines Benutzers beinhaltet.

13. Computerimplementiertes System nach Anspruch 12, wobei der mindestens eine Prozessor weiterhin konfiguriert ist zum:
Bestimmen des Standorts des Benutzers gemäß Breitengrad- und Längengradwerten (Lat/Lon-Werten) auf der Basis eines WGS84-Standards, Weltkoordinaten, die einen spezifischen Punkt auf der digitalen Karte angeben, und Kachelkoordinaten, die eine spezifische Kachel auf der digitalen Karte angeben, bei einer spezifischen Zoomstufe; und optional
wobei der mindestens eine Prozessor weiterhin konfiguriert ist zum:
Übersetzen der Breitengrad- und Längengradwerte (Lat/Lon-Werte) in Weltkoordinaten auf der Basis einer Mercator-Projektion und
Umwandeln der Weltkoordinaten auf der Basis der Mercator-Projektion in entsprechende Pixelkoordinatenwerte auf der Basis der spezifischen Zoomstufe; und optional wobei der mindestens eine Prozessor weiterhin konfiguriert ist zum:
Unterteilen der digitalen Karte bei jeder Zoomstufe in einen Satz von Kartenkacheln und
Übersetzen der Pixelkoordinatenwerte in einen Satz von Kacheln zum Abrufen durch eine digitale Kartenanwendung.

14. Nichtflüchtiges, computerlesbares Medium, das Anweisungen speichert, die dazu konfiguriert sind zu bewirken, dass mindestens ein Prozessor Arbeitsschritte durchführt, umfassend:
Empfangen einer Anforderung von Kartendaten, wobei die Kartendaten mit einem geografischen Gebiet assoziiert sind;
Bestimmen eines Viewports (300) zum Anzeigen der Kartendaten auf einer Benutzervorrichtung;
Berechnen einer Maßstabsentfernung (204, 304) auf der Basis einer Messung von dem Zentrum eines ersten Rands (206, 306) zu dem Zentrum eines zweiten Rands (208, 308) des bestimmten Viewports;
Bestimmen einer Maßstabsausrichtung auf der Basis der Messung von dem Zentrum des ersten Rands zu dem Zentrum des zweiten Rands des bestimmten Viewports und
Bereitstellen der angeforderten Kartendaten und Anweisungen zum Anzeigen der Kartendaten an die Benutzervorrichtung, wobei die Anweisungen Anweisungen zum Anzeigen eines grafischen Elements (202, 302) beinhalten, das die Maßstabsentfernung und die Maßstabsausrichtung in mindestens einer von einer horizontalen oder einer vertikalen Richtung spezifiziert.

15. Computerimplementiertes Verfahren, umfassend die folgenden Arbeitsschritte, die von einem oder mehreren Prozessoren durchgeführt werden:
Empfangen einer Anforderung von Kartendaten, wobei die Kartendaten mit einem geografischen Gebiet assoziiert sind;
Bestimmen eines Viewports (300) zum Anzeigen der Kartendaten auf einer Benutzervorrichtung;
Berechnen einer Maßstabsentfernung (204, 304) auf der Basis einer Messung von dem Zentrum eines ersten Rands (206, 306) zu dem Zentrum eines zweiten Rands (208, 308) des bestimmten Viewports;
Bestimmen einer Maßstabsausrichtung auf der Basis der Messung von dem Zentrum des ersten Rands zu dem Zentrum des zweiten Rands des bestimmten Viewports und
Bereitstellen der angeforderten Kartendaten und Anweisungen zum Anzeigen der Kartendaten an die Benutzervorrichtung, wobei die Anweisungen Anweisungen zum Anzeigen eines grafischen Elements (202, 302) beinhalten, das die Maßstabsentfernung und die Maßstabsausrichtung in mindestens einer von einer horizontalen oder einer vertikalen Richtung spezifiziert.

## Revendications

1. Système mis en œuvre par ordinateur comprenant :
un support lisible par ordinateur qui stocke des instructions ;
et au moins un processeur configuré pour exécuter les instructions pour :
recevoir une demande de données cartographiques, les données cartographiques étant associées à une zone géographique ;
déterminer une fenêtre d'affichage (300) pour afficher les données cartographiques sur un dispositif d'utilisateur ;
calculer une distance d'échelle (204, 304) sur la base d'une mesure depuis le centre d'un premier bord (206, 306) jusqu'au centre d'un deuxième bord (208, 308) de la fenêtre d'affichage déterminée ;
déterminer une orientation d'échelle sur la base de la mesure depuis le centre du premier bord jusqu'au centre du deuxième bord de la fenêtre d'affichage déterminée ; et
fournir, au dispositif d'utilisateur, les données cartographiques demandées et des instructions pour afficher les données cartographiques, dans lequel les instructions incluent des instructions pour afficher un élément graphique (202, 302) spécifiant la distance d'échelle et l'orientation d'échelle dans au moins l'une d'une direction horizontale ou verticale.

2. Système mis en œuvre par ordinateur selon la revendication 1, dans lequel l'au moins un processeur est en outre configuré pour :
recalculer la distance d'échelle, sur la base d'un changement d'au moins l'une de la zone géographique, l'orientation du dispositif utilisateur et l'entrée d'utilisateur.

3. Système mis en œuvre par ordinateur selon la revendication 1, dans lequel l'au moins un processeur est en outre configuré pour :
mettre à jour l'orientation d'échelle, sur la base d'une sélection de l'élément graphique ou d'un changement d'au moins l'une de la zone géographique, l'orientation du dispositif d'utilisateur et l'entrée d'utilisateur.

4. Système mis en œuvre par ordinateur selon la revendication 3, dans lequel l'au moins un processeur est en outre configuré pour :
fournir des instructions pour afficher l'orientation d'échelle mise à jour comme faisant partie de l'élément graphique.

5. Système mis en œuvre par ordinateur selon la revendication 1, dans lequel l'au moins un processeur est en outre configuré pour :
identifier des paramètres de la fenêtre d'affichage en fonction d'une échelle par défaut, l'échelle par défaut étant sélectionnée en fonction d'au moins l'un du type de dispositif d'utilisateur, une orientation du dispositif d'utilisateur et la demande des données cartographiques.

6. Système mis en œuvre par ordinateur selon la revendication 1, dans lequel l'élément graphique spécifie en outre une orientation de la fenêtre d'affichage en plus de la distance d'échelle et de l'orientation d'échelle dans au moins l'une d'une direction horizontale ou verticale.

7. Système mis en œuvre par ordinateur selon la revendication 1, dans lequel l'au moins un processeur est en outre configuré pour :
détecter un changement dans le type du dispositif d'utilisateur sur la base de la réception d'un identifiant de type de dispositif transmis avec la demande de données cartographiques.

8. Système mis en œuvre par ordinateur selon la revendication 1, dans lequel l'au moins un processeur est en outre configuré pour :
détecter un changement dans l'orientation du dispositif d'utilisateur sur la base d'au moins l'un de capteurs de position ou d'orientation et d'images de caméra.

9. Système mis en œuvre par ordinateur selon la revendication 1, dans lequel l'au moins un processeur est en outre configuré pour :
détecter un changement dans l'entrée d'utilisateur au niveau de l'interface utilisateur graphique sur la base d'au moins l'un de capteurs piézoélectriques et d'une comparaison de l'entrée d'utilisateur à des données d'entrée d'utilisateur historiques.

10. Système mis en œuvre par ordinateur selon la revendication 9, dans lequel le changement dans l'entrée d'utilisateur au niveau de l'interface utilisateur graphique comprend un changement dans un niveau de zoom, un changement dans le temps passé par l'utilisateur à visualiser la fenêtre d'affichage, ou un changement dans le nombre de requêtes de recherches effectuées dans la fenêtre d'affichage.

11. Système mis en œuvre par ordinateur selon la revendication 1, dans lequel
le centre du premier bord est un point milieu central gauche et le centre du deuxième bord est un point milieu central droit, et dans lequel l'orientation de l'échelle est horizontale ; ou
le centre du premier bord est un point milieu central inférieur et le centre du deuxième bord est un point milieu central supérieur, et dans lequel l'orientation de l'échelle est verticale.

12. Système mis en œuvre par ordinateur selon la revendication 1, dans lequel l'au moins un processeur est en outre configuré pour :
demander des données cartographiques incluant au moins l'une d'une feuille de route, une carte satellite, une carte hybride et une carte de terrain sur la base de l'emplacement d'un utilisateur.

13. Système mis en œuvre par ordinateur selon la revendication 12, dans lequel l'au moins un processeur est en outre configuré pour :
déterminer la localisation de l'utilisateur en fonction de valeurs de latitude et de longitude (Lat / Lon) basées sur une norme WGS84, de coordonnées mondiales indiquant un point spécifique sur la carte numérique et de coordonnées de tuile indiquant une tuile spécifique sur la carte numérique à un niveau de zoom spécifique ; et éventuellement l'au moins un processeur est en outre configuré pour :
traduire les valeurs de latitude et de longitude (Lat / Lon) en coordonnées mondiales basées sur une projection de Mercator ; et
convertir les coordonnées mondiales basées sur la projection de Mercator en valeurs de coordonnées de pixels correspondantes basées sur le niveau de zoom spécifique ; et éventuellement l'au moins un processeur est en outre configuré pour :
diviser la carte numérique à chaque niveau de zoom en un ensemble de tuiles de carte ; et traduire les valeurs des coordonnées de pixels en un ensemble de tuiles pour récupération par une application de cartographie numérique.

14. Support non transitoire lisible par ordinateur stockant des instructions configurées pour amener au moins un processeur à effectuer des opérations comprenant :
la réception d'une demande de données cartographiques, les données cartographiques étant associées à une zone géographique ;
la détermination d'une fenêtre d'affichage (300) pour afficher les données cartographiques sur un dispositif d'utilisateur ;
le calcul d'une distance d'échelle (204, 304) sur la base d'une mesure depuis le centre d'un premier bord (206, 306) jusqu'au centre d'un deuxième bord (208, 308) de la fenêtre d'affichage déterminée ;
la détermination d'une orientation d'échelle sur la base de la mesure depuis le centre du premier bord jusqu'au centre du deuxième bord de la fenêtre d'affichage déterminée ; et
la fourniture, au dispositif d'utilisateur, des données cartographiques demandées et d'instructions pour afficher les données cartographiques, dans lequel les instructions incluent des instructions pour afficher un élément graphique (202, 302) spécifiant la distance d'échelle et l'orientation d'échelle dans au moins l'une d'une direction horizontale ou verticale.

15. Procédé mis en œuvre par ordinateur comprenant les opérations suivantes effectuées par un ou plusieurs processeurs :
réception d'une demande de données cartographiques, les données cartographiques étant associées à une zone géographique ;
détermination d'une fenêtre d'affichage (300) pour afficher les données cartographiques sur un dispositif d'utilisateur ;
calcul d'une distance d'échelle (204, 304) sur la base d'une mesure depuis le centre d'un premier bord (206, 306) jusqu'au centre d'un deuxième bord (208, 308) de la fenêtre d'affichage déterminée ;
détermination d'une orientation d'échelle sur la base de la mesure depuis le centre du premier bord jusqu'au centre du deuxième bord de la fenêtre d'affichage déterminée ; et
fourniture, au dispositif d'utilisateur, des données cartographiques demandées et d'instructions pour afficher les données cartographiques, dans lequel les instructions incluent des instructions pour afficher un élément graphique (202, 302) spécifiant la distance d'échelle et l'orientation d'échelle dans au moins l'une d'une direction horizontale ou verticale.
